# EUROPEAN PATENT APPLICATION

(11) **EP 4 230 689 A1**
(43) Date of publication of application: **23.08.2023**
(21) Application number: 22157004.7
(22) Date of filing: 16.02.2022
(51) Int. Cl.: C08K 5/00, C08L 55/02

(54) **EXTREMELY LOW ODOR VINYLIDENE SUBSTITUTED AROMATIC POLYMER CONTAINING COMPOSITION**

(71) Applicant: Trinseo Europe GmbH, 8810 Horgen (CH)
(72) Inventor: PAN, Macro Jingyun, Shanghai, 201203 (CN); LAM, Chin Ming, NT Hong Kong (CN); WONG, Po Lung Kurt, NT Hong Kong (CN); BARTELINK, Camiel F., 4562JW Goes (NL); BOUQUET, Gilbert, 9000 Gent (BE); CHUNG, Yao-Chu (Luke), Chinese Taipei, 30352 (CN); LAKEMAN, Pascal E.R.E.J., Breda AW (NL)
(74) Representative: Hoffmann Eitle

(57) **Abstract**

Disclosed is composition comprising: a) one or more polymers containing monomer units derived from vinylidene substituted aromatic monomers; b) one or more antioxidants; and, c) one or more additives of zinc salts, colorants, mold release agents, fillers, reinforcing fibers, ignition resistant additives, stabilizers, adsorbers, antistatic agents, silicon oils, flow enhancers, or combinations thereof; wherein the one or more polymers, antioxidants, and additives do not release volatile sulfur compounds when exposed to temperatures of 200 °C or greater, and according to test procedure VDA 277 release less than 0.02 ugC/g of volatile sulfur containing compounds. Disclosed are methods of preparing articles from the composition and the articles prepared.

## Description

### TECHNICAL FIELD

Disclosed are vinylidene substituted aromatic polymers compositions which do not form or release volatile sulfur containing compounds when exposed to high temperature environments. Disclosed are methods of reducing the total volatile sulfur containing compounds in vinylidene substituted aromatic polymer containing compositions or the release of the total volatile sulfur containing compounds from such compositions. Disclosed are methods for preparing fabricated structures containing such compositions. Disclosed are fabricated structures containing vinylidene substituted aromatic polymers compositions which do not release volatile sulfur containing compounds.

### BACKGROUND

Polymers prepared from vinylidene substituted aromatic monomers, such as styrene, are used in a number of polymeric systems, including foams, packaging (food packaging), medical, electronic, optical, appliance and automotive applications. Polymers of vinylidene substituted aromatic monomers do not exhibit great impact properties and modified polymers containing vinylidene substituted aromatic monomers have been developed to improve the impact resistance. Such modified polymers may contain conjugated diene (such as butadiene) based rubbers, for example, polymers of styrene and acrylonitrile modified with polybutadiene rubber, commonly referred to as acrylonitrile-butadiene-styrene and high impact polystyrene which contains polybutadiene rubber. Such modified vinylidene substituted aromatic polymers are used in many applications such as, for example, automotive interior components. Commonly owned application WO 2020/143929 discloses vinylidene substituted aromatic polymer-based compositions which contain zinc salts to reduce the odor of such polymer-based compositions.

Vinylidene substituted aromatic polymer containing compositions may contain odorous volatile sulfur compounds or may release such volatile sulfur compounds during and after processing at high temperatures, which makes use in an odor sensitive environment such as automotive interior components problematic. There is a need for vinylidene substituted aromatic polymer-based compositions which have or release a low amount of total volatile sulfur compositions, especially when exposed to high temperature environments. There is a need for methods of preparing vinylidene substituted aromatic polymer-based compositions and structures prepared therefrom that do not contain or release volatile sulfur compounds or contain or release small amounts of volatile sulfur compounds.

### SUMMARY

The vinylidene substituted aromatic polymer compositions and articles disclosed herein exhibit lower amounts of volatile sulfur compounds and therefore release lower levels of volatile sulfur containing compounds which can add to the odor emanating from such compositions and structures. Disclosed is a composition comprising: a) one or more polymers containing monomer units derived from vinylidene substituted aromatic monomers; b) one or more antioxidants; and, c) one or more additives of zinc salts, colorants, mold release agents, fillers, reinforcing fibers, ignition resistant additives, stabilizers, adsorbers, antistatic agents, silicon oils, flow enhancers, or combinations thereof; wherein the one or more polymers, antioxidants, and additives do not release volatile sulfur compounds when exposed to temperatures of 200 °C or greater, and according to test procedure VDA 277 release less than 0.02 ugC/g of volatile sulfur containing compounds. Disclosed are articles prepared from the compositions disclosed which exhibit the desired levels of volatile sulfur compounds.

The vinylidene substituted aromatic monomers comprise vinylidene groups bonded directly to aromatic structures. Examples are styrene and alpha-methyl styrene. The polymers may be copolymers containing comonomers of one or more of one or more (meth)acrylates, one or more unsaturated nitriles, one or more conjugated dienes, one or more alpha- or beta-unsaturated monobasic acids, one or more vinyl halides, one or more vinyl esters, one or more ethylenically unsaturated dicarboxylic acids or anhydrides, one or more dialkyl maleates or fumarates or N-phenyl maleimide. The polymers may be copolymers containing comonomers of one or more of one or more (meth)acrylates, one or more unsaturated nitriles, one or more conjugated dienes, one or more alpha- or beta-unsaturated monobasic acids, or N-phenyl maleimide. The copolymers may comprise vinylidene substituted aromatic monomers and one or more conjugated dienes. The copolymers may comprise acrylonitrile butadiene styrene or high impact polystyrene. The copolymers may be prepared by mass polymerization or by emulsion polymerization. The copolymers may be prepared by mass polymerization. The compositions disclosed may be in the form of pellets or final structures prepared from the pellets.

The antioxidants may be any antioxidants that do not contain volatile sulfur compounds or release volatile sulfur compounds. The antioxidants may be any antioxidants which do not release volatile sulfur compounds when exposed to elevated temperature conditions, such as 200 °C or greater or 250 °C or greater. The antioxidants may be compounds that do not contain sulfur groups. The antioxidant may be one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants. The antioxidant may be one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants which do not contain sulfur containing groups.

The antioxidants may be present in the compositions and structures formed therefrom in any amount which retards oxidation of the polymers. The antioxidants may be present in an amount based on the weight of the compositions disclosed of about 100 parts per million or greater, about 200 parts per million or greater, about 300 parts per million or greater, about 500 parts per million or greater or about 1000 parts per million or greater. The antioxidants may be present in an amount based on the weight of the compositions disclosed of about 10,000 parts per million or less, about 8,000 parts per million or less or about 6,000 parts per million or less.

Volatile sulfur containing compounds are any compounds that are formed and/or released from the compositions disclosed in this application. Such compounds may be formed or released during processing. The volatile sulfur containing compounds may be formed during processing and may be released during processing or after processing. The volatile sulfur containing compounds may have an unpleasant odor which may be problematic when the compositions are processed and/or used. The volatile sulfur containing compounds may be any sulfur containing compounds which are volatile at processing temperatures. Such compounds may be released or formed at temperatures of about 200 °C or greater or 250 °C or greater. The volatile sulfur containing compounds may be volatile at ambient temperatures (about 15 to 40 °C) and therefore be released from structures prepared for the disclosed compositions while in use. Such release may result in unacceptable odors emanating from the structures during their utilization. The volatile sulfur containing compounds may be any sulfur containing compounds having a molecular weight of about 200 g/mole or less. The volatile sulfur containing compounds may be alkyl thiols and the like, such as octyl thiol.

Disclosed is a method of forming an article comprising contacting the elements of the compositions disclosed herein and forming a structure from the contacted elements wherein either or both of the contacting step and the forming step result in exposure of the contacted elements to temperatures of about 200 °C or greater provided the exposure to temperatures of about 200 °C or greater do not form volatile sulfur compounds or release low amounts of volatile sulfur compounds. Disclosed is a method comprising contacting the elements of a composition as disclosed herein in an extruder and pelletizing the extrudate. The contacting step or the forming steps may be performed at a temperature of about 250 °C or greater.

Disclosed is a method of preparing the vinylidene substituted aromatic polymers, compositions and articles which include one or more zinc salts. The method includes the steps of mixing pellets of vinylidene substituted aromatic polymers, with a zinc salt, feeding the mixture into an extruder, collecting the extrudate and making pellets of the extrudate.

The compositions disclosed and structures prepared from such compositions exhibit low odors. Such compositions according to test procedure VDA 277 release less than 0.02 ugC/g of volatile sulfur containing compounds. Articles formed from compositions disclosed herein exhibit an odor rating of 3.5 or less according to VDA 270 odor testing procedure. The structures may be used in automobiles, trains, buses, recreation vehicles (RVs) and the like.

### BRIEF DESCRIPTION OF THE DRAWINGS

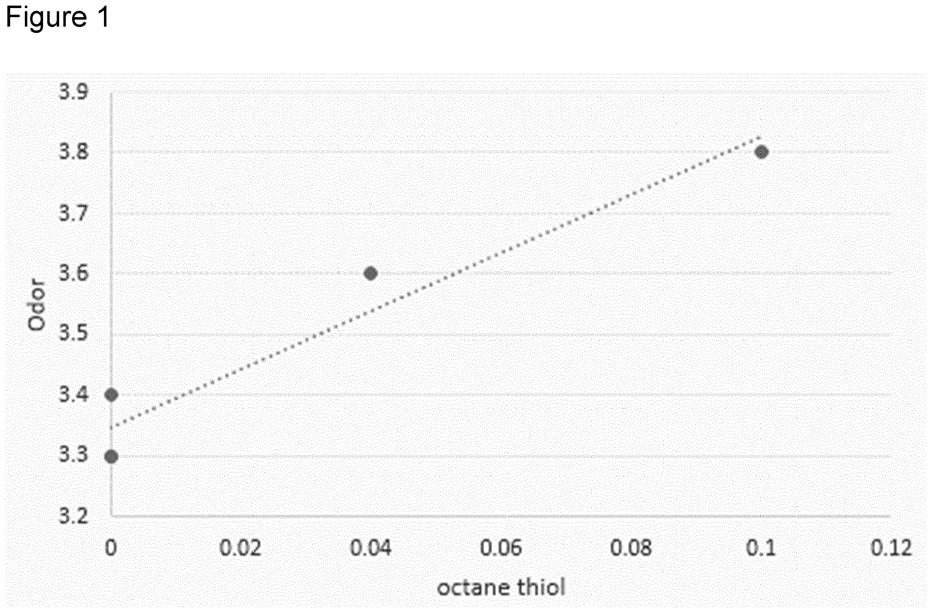

Figure 1 shows correlation between octane thiol concentration (VDA 277) and odor determined (VDA 270).

### DETAILED DESCRIPTION

While the disclosure has been described in connection with certain embodiments, it is to be understood that the disclosure is not to be limited to the disclosed embodiments and is intended to cover various modifications and equivalent arrangements included within the scope of the appended claims, which scope is to be accorded the broadest interpretation to encompass all such modifications and equivalent structures as is permitted under the law.

One or more as used herein means that at least one, or more than one, of the recited components may be used as disclosed. Hydrocarbyl as used herein refers to a group containing one or more carbon atom backbones and hydrogen atoms, which may optionally contain one or more heteroatoms. Where the hydrocarbyl group contains heteroatoms, the heteroatoms may form one or more functional groups well known to one skilled in the art. Hydrocarbyl groups may contain cycloaliphatic, aliphatic, aromatic or any combination of such segments. The aliphatic segments can be straight or branched. The aliphatic and cycloaliphatic segments may include one or more double and/or triple bonds. Included hydrocarbyl groups are alkyl, alkenyl, alkynyl, aryl, cycloalkyl, cycloalkenyl, alkaryl and aralkyl groups. Cycloaliphatic groups may contain both cyclic portions and noncyclic portions. Hydrocarbylene means a hydrocarbyl group or any of the described subsets having more than one valence, such as alkylene, alkenylene, alkynylene, arylene, cycloalkylene, cycloalkenylene, alkarylene and aralkylene. Valence as used herein means a covalent bond between a hydrocarbyl or hydrocarbylene group and another group such as a carbonyl, oxygen, nitrogen or sulfur containing group or atom, or the referenced base compound. As used herein percent by weight or parts by weight refer to, or are based on, the weight of the compositions unless otherwise specified. Tg is the temperature or temperature range at which a polymeric material shows an abrupt change in its physical properties, including, for example, mechanical strength. Tg can be determined by differential scanning calorimetry (DSC).

Disclosed compositions comprising one or more polymers containing vinylidene substituted aromatic monomers and structures prepared from such polymers wherein the compositions and structures prepared from the structures which do not release or release low levels of odorous volatile sulfur containing compounds. The polymers may be copolymers. Such copolymers may contain one or more of one or more (meth)acrylates, one or more unsaturated nitriles, one or more conjugated dienes, one or more alpha- or beta-unsaturated monobasic acids, one or more vinyl halides, one or more vinyl esters, one or more ethylenically unsaturated dicarboxylic acids or anhydrides, one or more dialkyl maleates or fumarates or N-phenyl maleimide. Such compositions and structures are adapted to avoid objectionable odors emanating therefrom. The composition described contain antioxidants. The structures described contain one or more additives. Additives which may be utilized in the compositions may be zinc salts, colorants, mold release agents, impact modifiers, fillers, reinforcing fibers, or combinations thereof. The source of the volatile sulfur containing compounds may be any of the ingredients of the composition, including the polymers, the antioxidants or the additives. Sulfur containing chain transfer agents are commonly used in preparing the polymers. Some common antioxidants contain sulfur. During processing of the polymers, compositions and formation of the structures volatile sulfur compounds may be formed and/or released. Some of these volatile sulfur compounds may cause unpleasant odors. The compositions may be modified with impact modifiers, the impact modifiers may contain antioxidants. The elements of the composition are chosen to reduce the formation and or release of volatile sulfur compounds which may cause unpleasant odors.

The polymers disclosed herein contain vinylidene substituted aromatic monomers. Vinylidene substituted aromatic monomers comprise vinylidene, alkenyl groups, bonded directly to aromatic structures. The vinylidene substituted aromatic monomers may contain one or more aromatic rings, may contain one or two aromatic rings, or may contain one aromatic ring. The aromatic rings can be unsubstituted or substituted with a substituent that does not interfere with polymerization of the vinylidene substituted aromatic monomers or the fabrication of the polymers formed into desired structures. The substituents may be halogens or alkyl groups, such as bromine, chlorine or C₁ to C₄ alkyl groups; or a methyl group. Alkenyl groups comprise straight or branched carbon chains having one or more double bonds, or one double bond. The alkenyl groups useful for the vinylidene substituted aromatic monomers may include those that when bonded to an aromatic ring are capable of polymerization to form polymers. The alkenyl groups may have 2 to 10 carbon atoms, 2 to 4 carbon atoms or 2 carbon atoms. Exemplary vinylidene substituted aromatic monomers include styrene, alpha methyl styrene, N-phenyl maleimide and chlorinated styrenes; or alpha-methyl styrene and styrene. The vinylidene substituted aromatic monomers may be mono-vinylidene aromatic monomers, which contain one unsaturated group. Vinylidene aromatic monomers include but are not limited to those described in U.S. Pat. Nos. 4,666,987; 4,572,819 and 4,585,825, which are herein incorporated by reference. The monomer may correspond to the formula: 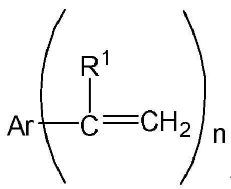 where R¹ is separately in each occurrence hydrogen or methyl and Ar is separately in each occurrence an aromatic group. Ar may contain one or more aromatic rings, may contain one or two aromatic rings, or may contain one aromatic ring. n is separately in each occurrence 1 to 3, 1 to 2 or 1. The aromatic rings can be unsubstituted or substituted with a substituent that does not interfere with polymerization of the vinylidene substituted aromatic monomers, or the fabrication of the polymers formed into desired structures. The substituents may be halogens or alkyl groups, such as bromine, chlorine or C₁ to C₄ alkyl groups; or a methyl group. The vinylidene substituted aromatic monomers may be present in the polymers in a sufficient amount such that the polymer exhibits the advantageous properties associated with polymers of vinylidene substituted aromatic monomers, for instance polystyrene. Among the advantageous properties of polymers of vinylidene substituted monomers include glass transition temperatures of about 100 °C or greater, transparency where desired for the use, high heat deflection temperatures, and the like. Other advantageous properties of polymers of vinylidene substituted monomers include processability, stiffness, and thermal stability. The polymers disclosed herein contain vinylidene substituted aromatic monomers in an amount of about 10 percent by weight of the polymers or greater, about 15 percent by weight or greater or about 20 percent by weight or greater. The polymers of one or more vinylidene aromatic monomers may contain vinylidene substituted aromatic monomers in an amount of about 100 percent by weight of the polymers or less, about 90 percent by weight or less or about 60 percent by weight or less.

The compositions may contain branching agents commonly used in vinylidene aromatic based polymers. The branching agents may be vinylidene substituted aromatic monomers having 2 or more vinylidene groups. Other branching agents may include other difunctional and in general multifunctional (functionality >2) monomers, multifunctional initiators and multifunctional chain transfer agents and the like. The branching agents may be present in the polymers in an amount of about 0.001 percent by weight of the composition or greater, about 0.002 percent by weight or greater or about 0.003 percent by weight or greater. The branching agents may be present in the polymers in an amount of about 0.5 percent by weight of the composition or less, about 0.2 percent by weight or less or about 0.1 percent by weight or less.

The copolymers may include two or more monomers, vinylidene substituted aromatic monomers and/or one or more of one or more (meth)acrylates, one or more unsaturated nitriles, one or more conjugated dienes, one or more alpha- or beta-unsaturated monobasic acids, one or more vinyl halides, one or more vinyl esters, one or more ethylenically unsaturated dicarboxylic acids or anhydrides or one or more dialkyl maleates or fumarates. The copolymers may contain styrene and N-phenyl maleimide. The copolymers may contain one or more of one or more (meth)acrylates, one or more unsaturated nitriles, one or more conjugated dienes, one or more alpha- or beta-unsaturated monobasic acids, or N-phenyl maleimide. The copolymers may comprise vinylidene substituted aromatic monomers and one or more conjugated dienes. The copolymers comprise acrylonitrile butadiene styrene or high impact polystyrene. The copolymers may be impact modified with an impact modifier. The impact modifiers may be polymerized conjugated dienes. The impact modifiers may be polybutadienes.

The polymers disclosed herein may comprise one or more (meth)acrylates. (Meth)acrylate as used herein refers to compounds having a vinyl group bonded to the carbonyl moiety of an alkyl ester wherein the carbon of the vinyl group bonded to the carbonyl group further has a hydrogen or a methyl group bonded thereto. The term (meth) as used in this context refers to compounds having either of a hydrogen or methyl group on the carbon of the vinyl group bonded to the carbonyl group. (Meth)acrylates useful include those which correspond to the formula: 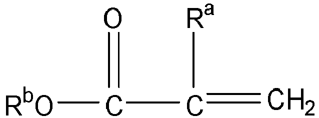 wherein R^{a} is separately in each occurrence H or -CH₃; and R^{b} may be a C ₁ to C-₃₀ alkyl group or C ₁₋₁₀ alkyl group. Examples of the one or more (meth)acrylates include lower alkyl (meth)acrylates, such as methyl (meth)acrylate, ethyl (meth)acrylate, propyl (meth)acrylate, butyl (meth)acrylate, pentyl (meth)(acrylate) and hexyl (meth) acrylate. The one or more (meth)acrylates in the polymer may be present in sufficient amount to provide the desired properties of the polymer such as processability, practical toughness, refractive index, environmental stress crack resistance, hydrolytic stability, thermal stability, UV stability, impact resistance, weatherability, and the like. The polymers disclosed herein contain (meth)acrylates in an amount of about 0 percent by weight of the polymers or greater, about 1 percent by weight or greater or about 2 percent by weight or greater. The polymers disclosed herein contain (meth)acrylates in an amount of about 20 percent by weight of polymers or less, about 15 percent by weight or less, about 10 percent by weight or less, about 8 percent by weight or less or about 5 percent by weight or less.

The polymers may comprise one or more unsaturated nitriles. Unsaturated nitriles include, but are not limited to, acrylonitrile, methacrylonitrile, ethacrylonitrile, fumaronitrile and mixtures thereof. The unsaturated nitrile may be acrylonitrile. The unsaturated nitriles are used in the polymers to enhance the glass transition temperature, transparency, chemical resistance and the like. The polymers disclosed may contain one or more unsaturated nitriles in an amount of about 0 percent by weight of the polymers or greater, about 1 percent by weight or greater or about 2 percent by weight or greater. The polymers may contain one or more unsaturated nitriles in an amount of about 40 percent by weight of the polymers or less, about 35 percent by weight or less, about 30 percent by weight or less or about 20 percent by weight or less.

Other vinyl monomers may also be included in the polymers, in sufficient amount to provide the desired properties as disclosed herein, including conjugated 1,3 dienes (for example butadiene, isoprene, etc.); alpha- or beta-unsaturated monobasic acids and derivatives thereof (for example, acrylic acid, methacrylic acid, etc.); vinyl halides such as vinyl chloride, vinyl bromide; vinylidene chloride, vinylidene bromide; vinyl esters such as vinyl acetate, vinyl propionate, etc.; ethylenically unsaturated dicarboxylic acids and anhydrides and derivatives thereof, such as maleic acid, fumaric acid, maleic anhydride, dialkyl maleates or fumarates, such as dimethyl maleate, diethyl maleate, dibutyl maleate, the corresponding fumarates; and the like. These additional comonomers can be incorporated into the composition in several ways including, interpolymerization with the vinylidene substituted aromatic containing copolymer and/or polymerization into polymeric components which can be combined, for example blended with the polymer. If present, the amount of such comonomers may be about 20 weight percent or less, about 10 weight percent or less or about 5 weight percent or less based on the total weight of the polymer. Such comonomers may be present in an amount of about 1 percent by weight or greater or the polymer.

The compositions disclosed may contain impact modifiers. The terms impact modifiers and rubbers are used interchangeably herein. Various impact modifiers may be used in the compositions disclosed; such as diene rubbers, ethylene propylene rubbers, ethylene propylene diene (EPDM) rubbers, ethylene copolymer rubbers, acrylate rubbers, polyisoprene rubbers, silicon rubbers, silicon-acrylate rubbers, polyurethanes, thermoplastic elastomers, halogen containing rubbers, and mixtures thereof. Also suitable are inter-polymers of rubber-forming monomers with other copolymerizable monomers. The rubbers may be present in the formulated composition in sufficient amount to provide the desired impact properties to the composition. Desired impact properties include increased izod, charpy, gardner, tensile, falling dart, and the like. The compositions disclosed herein may contain impact modifiers (rubbers) in an amount of about 0.5 percent by weight of the compositions or greater, about 1 percent by weight or greater, about 2 percent by weight or greater or about 7 percent by weight or greater. The compositions disclosed herein may contain impact modifiers (rubbers) in an amount of about 50 percent by weight of the compositions or less, about 45 percent by weight or less, about 40 percent by weight or less, about 30 percent by weight or less, about 20 percent by weight or less or about 10 percent by weight or less. The compositions disclosed herein may contain the copolymer in an amount of about 50 percent by weight of the compositions or greater. The compositions disclosed herein contain copolymer in an amount of about 99.5 percent by weight of the compositions or less, about 93 percent by weight of the compositions or less, about 80 percent by weight of the compositions or less or about 60 percent by weight of the compositions or less. Compositions, formulated compositions, as used in this context are the formulated compositions containing all of the ingredients for the intended use.

The rubbers may be diene rubbers such as polybutadiene, polyisoprene, polypiperylene, polychloroprene, and the like or mixtures of diene rubbers, that is, any rubbery polymers of one or more conjugated 1,3-dienes, such as 1,3-butadiene. Such rubbers include homopolymers of 1,3-butadiene and polymers of 1,3-butadiene with one or more copolymerizable monomers, such as vinylidene substituted aromatic (styrene). The diene rubber may be the homopolymer of 1,3-butadiene. Exemplary polymers of 1,3-butadiene are block or tapered block rubbers of at least about 30 weight percent 1,3-butadiene, from about 50 weight percent, from about 70 weight percent, or from about 90 weight percent 1,3-butadiene and up to about 70 weight percent vinylidene substituted aromatic monomer, up to about 50 weight percent, up to about 30 weight percent, or up to about 10 weight percent vinylidene substituted aromatic monomer, weights based on the weight of the 1,3-butadiene copolymer.

The impact modifiers employed may be those which exhibit a second order transition temperature, sometimes referred to as the glass transition temperature (Tg), for the diene fragment which is not higher than 0° C or not higher than -20° C. as determined using conventional techniques, for example ASTM Test Method D 746-52 T. The diene rubber may have a weight average molecular weight of at least about 100 kilograms per mole (kg/mole) or a weight average molecular weight of at least about a 300 kg/mole. The diene rubber may have a weight-average molecular weight equal to or less than about 900 kg/mole or a weight average molecular weight equal to or less than 600 kg/mole. The diene rubber may have a solution viscosity of at least 10 centiStokes (cSt) (10 percent (%) solution in styrene) or a solution viscosity of about 30 cSt. The diene rubber may have a solution viscosity about 500 cSt or about 400 cSt or less. The rubber, with graft and/or occluded polymers if present, is dispersed in the continuous matrix phase as discrete particles.

The rubber particles may comprise a range of sizes having a mono-modal, bimodal, or multimodal distribution. The average particle size of a rubber particle refers to the volume average diameter. The volume average diameter of a group of particles may be the same as the weight average. The average particle diameter measurement includes the polymer grafted to the rubber particles and occlusions of polymer within the particles. Unless otherwise specified, the rubber particle sizes disclosed and claimed herein are determined on a Coulter Multisizer II or II e with the ACCUCOMP^{™} Software Version 2.01 by the following method: about 3 granules of polymer samples (30-70 mg) are dissolved in 5 milliliters (ml) of Dimethyl Formamide (DMF), using an ultrasonic bath for agitation for approximately 15 to 20 minutes. 10 ml or an electrolyte solution (1 percent of NH₄SCN in DMF) is mixed with 0.2 ml of the sample solution. The coulter measuring stand is used with 20 micrometer Coulter tube and a 1.16 micrometer calibration material. The coincidence level indicator of the apparatus should read between 5 and 10 percent. If the reading is above 10 percent, dilute the sample in a beaker with electrolyte solution, or if it is too low, add more drops of the polymer solution in DMF. The volumetric mean particle size is reported. The average particle size of the rubber particles may be about 0.05 micrometers or less (microns) (µm), about 0.1 micrometers or less, or about 0.6 micrometers or less. The average particle size of the rubber particles may be about 10 micrometers or less, about 5 micrometers or less, or about 2 micrometers or less.

The disclosed compositions may contain one or more additives that are commonly used in compositions of this type. Exemplary additives include: zinc salts, colorants, mold release agents, fillers, reinforcing fibers, ignition resistant additives, stabilizers, adsorbers (e.g., zeolites, activated carbon, bamboo charcoal, etc.), antistatic agents, silicon oils, flow enhancers, etc. Exemplary ignition resistance additives include halogenated hydrocarbons, halogenated carbonate oligomers, halogenated diglycidyl ethers, organophosphorous compounds, fluorinated olefins, antimony oxide and metal salts of aromatic sulfur, or a mixture thereof may be used. Compounds which stabilize rubber-modified vinylidene substituted aromatic copolymer compositions against degradation caused by, but not limited to heat, light, and oxygen, or a mixture thereof may be used. Fillers and reinforcements may also be present. Exemplary fillers include talc, clay, wollastonite, mica, glass or a mixture thereof. Some of these additives may adsorb volatile organic compounds, such as, for example, zeolites, activated carbon, bamboo charcoal, etc.

Additives and/or fillers and/or adsorbents may be present in the formulated compositions in an amount about 0.01 percent by weight or greater, about 0.1 percent by weight or greater, about 1 percent by weight or greater, about 2 percent by weight or greater, or about 3 percent by weight or greater based on the weight of the compositions. The additives and/or fillers may be present in an amount of about 40 percent by weight or less, about 30 percent by weight or less, about 20 percent by weight or less, about 15 percent by weight or less, about 10 percent by weight or less, about 5 percent by weight or less based on the weight of the composition. The additives and adsorbents may be independently present in amounts up to about 5 weight percent while fillers may be present in amounts up to about 40 weight percent based on the weight of the compositions.

The disclosed compositions contain one of more antioxidants. Any antioxidant which does not form or release volatile sulfur containing compounds may be used. The antioxidants may be any antioxidants that do not contain volatile sulfur compounds or release volatile sulfur compounds. The antioxidants may be any antioxidants which do not release volatile sulfur compounds when exposed to elevated temperature conditions, such as 200 °C or greater or 250 °C or greater. The antioxidant may be compounds that do not contain sulfur groups. Antioxidants may be introduced into the compositions from ingredients utilized, such as the impact modifiers. The antioxidants may be added to the compositions separately.

The antioxidants may be one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants. The antioxidant may be one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants which do not contain sulfur containing groups.

Phenol based antioxidants include 2,6-di-tert-butyl-4-methylphenol; 2,6-diphenyl-4-methoxyphenol; 2,2'-methylenebis (6-tert-butyl-4-methylphenol); 2,2'-methylenebis(6-tert-butyl-4-methylphenol); 2,2'-methylene bis [4-methyl-6-(α-methylcyclohexyl)phenol]; 1,1-bis (5-tert-butyl-4-hdyroxy-2-methyl phenyl) butane; 2,2'-methylenebis(4-methyl-6-cyclohexyl phenol); 2,2'-methylenebis(4-methyl-6-nonylphenol); 1,1,3-tris(5-tert-butyl-4-hydroxy-2-methylphenyl) butane; 2,2-bis(5-tert-butyl-4-hydroxy-2-methylphenyl)-4-n-dodecylmercapto butane; ethylene glycol bis[3,3-bis(3-tert-butyl-4-hdyroxyphenyl) butyrate]; 1,1-bis(3,5-dimethyl-2-hydroxyphenyl)-3-(n-dodecylthio)butane; 4,4'-thiobis(6-tert-butyl-3-methyl phenol); 1,3,5-tris (3, 5-di-tert-butyl-4-hydroxybenzyl)-2,4,6-trimethylbenzene; dioctadecyl 2,2-bis(3,5-di-tert-butyl- 4-hydroxybenzyl)malonate ester; n-octadecyl-3-(4-hydroxy-3,5-di-tert-butylphenyl) propionate; tetrakis[methylene (3,5-di-tert-butyl-4-hydroxy hydrocinnamate) ]methane; and pentaerythritol tetrakis(3-(3,5-di-tert-butyl-4-hydroxyphenyl) propionate. Hydroquinone and alkylated hydroquinone based antioxidants include 2,6-di-tert-butyl-4-methoxyphenol, 2,5-di-tert-butylhydroquinone, 2,5-di-tert-amylhydroquinone, 2,6-di phenyl 4-octadecyloxyphenol, 2,6-di-tert-butylhydroquinone, 2,5-di-tert-butyl-4-hydroxy anisole, 3,5-di-tert-butyl-4-hydroxyanisole, 3,5-di-tert-butyl-4-hydroxyphenyl stearate, bis (3,5-di-tert-butyl-4-hydroxyphenyl) adipate. Tocopherols, based antioxidants include α-tocopherol, β-tocopherol, γ-tocopherol, δ-tocopherol and mixtures thereof (vitamin E). O- and N-benzyl compounds, based antioxidants include for example 3,5,3',5'-tetra-tert-butyl-4,4'-dihydroxydibenzyl ether, tris(3,5-di-tert-butyl-4-hydroxybenzyl) amine. Alkylidenebisphenol, based antioxidants include, 2,2'-methylenebis(6-tert-butyl-4-methyl phenol), 2,2'-methylenebis(6-tert-butyl-4-ethylphenol), 2,2'-methylenebis[4-methyl-6-(α-methyl cyclohexyl) phenol], 2,2'-methylenebis(4-methyl-6-cyclohexylphenol), 2,2'-methylene bis(6-nonyl-4-methylphenol), 2,2'-methylenebis(4,6-di-tert-butylphenol), 2,2'-ethylidenebis (4,6-di-tert-butylphenol), 2,2'-ethylidenebis(6-tert-butyl-4-isobutylphenol), 2,2'-methylene bis[6-(α-methylbenzyl)-4-nonylphenol], 2,2'-methylene bis[6-(α,α-dimethyl benzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl) butane, 2,6-bis(3-tert-butyl-5-methyl-2-hydroxybenzyl)-4-methylphenol, 1,1,3-tris(5-tert-butyl-4-hydroxy-2-methyl phenyl) butane, ethylene glycol bis[3,3-bis(3'-tert-butyl-4'-hydroxy phenyl)butyrate], bis[2-(3'-tert-butyl-2'-hydroxy-5'-methylbenzyl)-6-tert-butyl-4-methyl phenyl] terephthalate, 1,1-bis-(3,5-dimethyl-2-hydroxyphenyl)butane, 2,2-bis(3,5-di-tert-butyl-4-hydroxyphenyl)propane, 1,1,5,5-tetra(5-tert-butyl-4-hydroxy-2-methylphenyl) pentane. Hydroxybenzylated malonate based antioxidants include dioctadecyl-2,2-bis(3,5-di-tert-butyl-2-hydroxybenzyl)malonate, dioctadecyl-2-(3-tert-butyl-4-hydroxy-5-methyl benzyl)malonate, bis[4-(1,1,3,3-tetramethyl butyl)phenyl]-2,2-bis(3,5-di-tert-butyl-4-hydroxy benzyl)malonate. Aromatic hydroxybenzyl based antioxidants include 1,3,5-tris(3,5-di-tert-butyl-4-hydroxybenzyl)-2,4,6-trimethyl benzene, 1,4-bis(3,5-di-tert-butyl-4-hydroxybenzyl)-2,3,5,6-tetramethylbenzene, 2,4,6-tris (3,5-di-tert-butyl-4-hydroxybenzyl)phenol. Triazine compounds based antioxidants include 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenyl propionyl)-hexahydro-1,3,5-triazine and 1,3,5-tris(3,5-dicyclohexyl-4-hydroxybenzyl) isocyanurate. Benzylphosphonates, based antioxidants include dimethyl-2,5-di-tert-butyl-4-hydroxybenzylphosphonate, diethyl-3,5-di-tert-butyl-4-hydroxybenzylphosphonate, diocta decyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid. Acylaminophenol based antioxidants include, for example 4-hydroxylauranilide, 4-hydroxystearanilide, octyl N-(3,5-di-tert-butyl-4-hydroxyphenyl) carbamate. Exemplary antioxidants include esters of D-(3,5-di-tert-butyl-4-hydroxyphenyl) propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane. Exemplary antioxidants include esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl) oxamide, 3-thia undecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane. Exemplary antioxidants include esters of β-(3,5-dicyclohexyl-4-hydroxy phenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris (hydroxyethyl) isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane.Exemplary antioxidants include esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thia pentadecanol, trimethylhexanediol, trimethylolpropane, 4-hydroxymethyl-1-phospha-2,6,7-trioxabicyclo[2.2.2]octane.Exemplary antioxidants include amides of β-(3,5-di-tert-butyl-4-hydroxyphenyl) propionic acid e.g. N,N'-bis(3,5-di-tert-butyl-4-hydroxyphenylpropionyl) hexamethylene diamide, N,N'-bis(3,5-di-tert-butyl-4-hydroxyphenylpropionyl) tri methylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®} XL-1, supplied by Uniroyal).An exemplary antioxidant is ascorbic acid (vitamin C).Aminic antioxidants include N,N'-di-isopropyl-p-phenylenediamine, N,N'-di-sec-butyl-p-phenylene diamine, N,N'-bis(1,4-dimethylpentyl)-p-phenylenediamine, N,N'-bis(1-ethyl-3-methylpentyl) -p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylene diamine, N-isopropyl-N'-phenyl-p-phenylenediamine, N-(1,3-dimethyl butyl)-N'-phenyl-p-phenylenediamine, N-(1-methylheptyl)-N'-phenyl-p-phenylenediamine, N-cyclohexyl-N'-phenyl-p-phenylenediamine, N,N'-dimethyl-N,N'-di-sec-butyl-p-phenylene diamine, diphenylamine, N-allyldiphenylamine, 4-isopropoxydiphenylamine, N-phenyl-1-naphthyl amine, N-(4-tert-octylphenyl)-1-naphthylamine, N-phenyl-2-naphthylamine, octylated diphenylamine, p,p'-di-tert-octyldiphenylamine, 4-n-butylaminophenol, 4-butyryl amino phenol, 4-nonanoylaminophenol, 4-dodecanoylaminophenol, 4-octa decanoyl aminophenol, bis(4-methoxyphenyl)amine, 2,6-di-tert-butyl-4-dimethylaminomethylphenol, 2,4'-diamino diphenylmethane, 4,4'-diaminodiphenylmethane, N,N,N',N'-tetramethyl-4,4'-diamino diphenyl ethane, 1,2-bis[(2-methylphenyl)amino]ethane, 1,2-bis(phenylamino) propane, (o-tolyl)biguanide, bis[4-(1',3'-dimethylbutyl)phenyl]amine, tert-octylated N-phenyl-1-naphthyl amine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl /isohexyl diphenylamines, a mixture of mono- and dialkylated tert-butyldiphenylamines, N,N,N',N'-tetraphenyl-1,4-diaminobut-2-ene, N,N-bis(2,2,6,6-tetramethylpiperid-4-yl-hexa methylene diamine, bis(2,2,6,6-tetramethylpiperid-4-yl)sebacate, 2,2,6,6-tetramethyl piperidin-4-one, 2,2,6,6-tetramethylpiperidin-4-ol. Phosphoric antioxidants include tetrakis(2,4-di-t-butyl phenyl)-4,4-biphenylene phosphonite, tris(2,4-di-t-butylphenyl) phosphite, 2,2'-methylene bis(4,6-di-t-butylphenyl) octyl phosphite, bis(2,4-di-t-butylphenyl)pentaerythritol diphosphite, bis(2,6-di-t-butyl-4-methylphenyl)pentaerythritol diphosphite, di(nonylphenyl)pentaerythritol diphosphite, phenyl-bisphenol A-pentaerythritol diphosphite, distearylpentaerythritol diphosphite, dioctylpentaerythritol diphosphite, dilaurylpentaerythritol diphosphite, diphenylpentaerythritol diphosphite, dicyclohexylpentaerythritol diphosphite, bis(2,4,6-tri-t-butylphenyl) pentaerythritol diphosphite, 2,2'-ethylidenebis(4,6-di-t-butylphenyl) fluorophosphite, trisindecyl phosphite, trisdodecyl phosphite, phenylisooctyl phosphite, phenylindecyl phosphite, phenyldodecyl phosphite, diphenylisooctyl phosphite, diphenylisodecyl phosphite, diphenyldodecyl phosphite, triphenyl phosphite, tris(monononylphenyl) phosphite and tris(dinonylphenyl)phosphite. The antioxidant may be octadecyl 3,5-di-(tert)-butyl-4-hydroxyhydrocinnamate which is commercially available as IRGANOX 1076 from BASF.

The antioxidants may be present in the compositions and structures formed therefrom in any amount which retards oxidation of the polymers. The antioxidants may be present in an amount based on the weight of the compositions disclosed of about 100 parts per million or greater, about 200 parts per million or greater, about 300 parts per million or greater, about 500 parts per million or greater or about 1000 parts per million or greater. The antioxidants may be present in an amount based on the weight of the compositions disclosed of about 10,000 parts per million or less, about 8,000 parts per million or less or about 6,000 parts per million or less.

Volatile sulfur containing compounds are any compounds that are formed and/or released from the compositions disclosed in this application. Such compounds may be formed or released during processing. The volatile sulfur containing compounds may be formed during processing and may be released during processing or after processing. The volatile sulfur containing compounds may have an unpleasant odor which may be problematic when the disclosed compositions are processed and/or used. The volatile sulfur containing compounds may be any sulfur containing compounds which are volatile at processing temperatures. Such compounds may be released or formed at temperatures of about 200 °C or greater or 250 °C or greater. The volatile sulfur containing compounds may be volatile at ambient temperatures (about 15 to 40 °C) and therefore be released from structures prepared for the disclosed compositions while in use. Such release may result in unacceptable odors emanating from the structures during their utilization. The volatile sulfur containing compounds may be any sulfur containing compounds having a molecular weight of about 200 g/mole or less. The volatile sulfur containing compounds may be alkyl thiols and the like, such as octyl thiol. The source of the volatile sulfur containing compounds may be any of the ingredients of the composition, including the polymers, the antioxidants or the additives. Sulfur containing chain transfer agents are commonly used in preparing the polymers. Some common antioxidants contain as part of the molecules present sulfur.

Also disclosed herein are exemplary vinylidene substituted aromatic copolymers including acrylonitrile and styrene monomers in various proportions. The acrylonitrile-styrene polymers disclosed may contain styrene monomer in a concentration of about 25 percent by weight or more, about 50 percent by weight or more, or about 70 percent by weight or more and acrylonitrile monomer in a concentration of about 25 percent by weight or more, or about 50 percent by weight or more or more or about 70 percent by weight or more. The acrylonitrile-styrene polymers disclosed may contain styrene monomer at a concentration of, about 80 percent by weight or less, about 55 percent by weight or less or about 30 percent by weight or less and acrylonitrile monomer at a concentration of about 80 percent by weight or less, about 55 percent by weight or less, or less or about 30 percent by weight or less.

Also disclosed herein are exemplary vinylidene substituted aromatic polymers comprised of a nitrile monomer, a diene monomer and a vinylidene substituted aromatic monomer in various proportions, which may result in drastically different physical properties. The polymers disclosed may contain vinylidene substituted aromatic monomer in a concentration of about 50 percent by weight or more, about 65 percent by weight or more, about 70 percent by weight or more, diene monomer in a concentration of about 6 percent by weight or more, about 9 percent by weight or more, about 12 percent by weight or more, about 15 percent by weight or more, nitrile monomer in a concentration of about 10 percent by weight or more, about 20 percent by weight or more, about 30 percent by weight or more. The polymers disclosed may contain vinylidene substituted aromatic monomer at a concentration of about 55 percent by weight or less, about 60 percent by weight or less or about 75 percent by weight or less, diene monomer at a concentration of about 8 percent by weight or less, about 13 percent by weight or less or about 18 percent by weight or less, nitrile monomer at a concentration of about 15 percent by weight or less, about 25 percent by weight or less, about 35 percent by weight or less. The polymers disclosed may contain vinylidene substituted aromatic monomer at a concentration of about 60 percent by weight, diene monomer at a concentration of about 12 percent by weight or less and nitrile monomer at a concentration of about 23 percent.

Also disclosed herein are exemplary vinylidene substituted aromatic polymers including acrylonitrile, butadiene and styrene monomers in various proportions. The acrylonitrile-butadiene-styrene polymers disclosed may contain styrene monomer in a concentration of about 50 percent by weight or more, about 65 percent by weight or more, about 70 percent by weight or more, butadiene monomer in a concentration of about 6 percent by weight or more, about 9 percent by weight or more, about 12 percent by weight or more, about 15 percent by weight or more, acrylonitrile monomer in a concentration of about 10 percent by weight or more, about 20 percent by weight or more, about 30 percent by weight or more. The acrylonitrile-butadiene-styrene polymers disclosed may contain styrene monomer at a concentration of about 55 percent by weight or less, about 60 percent by weight or less or about 75 percent by weight or less, butadiene monomer at a concentration of about 8 percent by weight or less, about 13 percent by weight or less or about 18 percent by weight or less, acrylonitrile monomer at a concentration of about 15 percent by weight or less, about 25 percent by weight or less, about 35 percent by weight or less. The acrylonitrile-butadiene-styrene polymers disclosed may contain styrene monomer at a concentration of about 60 percent by weight, butadiene monomer at a concentration of about 12 percent by weight or less and acrylonitrile monomer at a concentration of about 23 percent. The acrylonitrile-butadiene-styrene polymers disclosed may be analyzed by several different methods including, for example, FTIR (i.e., Fourier transform infrared spectroscopy), which may be used characterize peaks of functional groups of acrylonitrile, styrene, and butadiene rubber, PGC-MS (i.e., pyrolysis gas chromatography-mass spectroscopy) and EG-MS (i.e., thermal evolved gas analyzer-mass spectroscopy).

The polymers disclosed may optionally include acrylate comonomer and/or maleimide comonomer. The comonomer may be n-butyl acrylate or N-phenyl maleimide or combinations thereof. The n-butyl acrylate may be present in an amount of less than about 10 wt%, while the N-phenyl maleimide may be present in an amount of less than about 10 wt%.

The compositions disclosed may include a zinc salt. The polymers, compositions and articles disclosed may contain from about 0.05 wt% to about 2 wt% of a zinc salt. The zinc salt may be a zinc salt of a long chain fatty acid. The long chain acid may contain 20 carbons or greater or 30 carbons or greater. The long chain acid may contain 40 carbons or less. The zinc salt may be zinc ricinoleate, zinc stearate, zinc palmitate, zinc laurate, zinc oxide, zinc carbonate or combinations thereof.

The composition may optionally include a component which adsorbs volatile organic compounds. The component may be a zeolite, activated carbon, bamboo, charcoal or combinations thereof.

The compositions disclosed may contain one or more zinc salts in a concentration sufficient to reduce the amount of volatile sulfur compounds in the polymers. The compositions disclosed may contain one or more zinc salts in a concentration of about 0.05 percent by weight or more, about 0.1 percent by weight or more, about 0.5 percent by weight or more or about 1 percent by weight or more. The compositions disclosed may contain a zinc salt at a concentration of about 4 percent by weight or less, about 3 percent by weight or less or about 2 percent by weight or less or 1.5 percent by weight or less. The zinc salt may be zinc ricinoleate.

Various techniques for producing the polymers are disclosed. Examples of these known polymerization processes include bulk, mass-solution, or mass-suspension polymerization, generally known as mass polymerization processes or emulsion polymerization processes. For a good discussion of how to make monovinylidene aromatic copolymer containing compositions see "Modern Styrenic Polymers" of Series In Polymer Science (Wiley), Ed. John Scheirs and Duane Priddy, ISBN 0 471 497525. Also, for example, U.S. Pat. Nos. 3,660,535; 3,243,481; and 4,239,863. Continuous mass polymerization techniques are advantageously employed in preparing the polymers. The polymerization may conducted in one or more substantially linear, stratified flow or so-called "plug-flow" type reactors such as described in U.S. Pat. No. 2,727,884, sometimes referred to as multizone plug flow bulk process, which may or may not comprise recirculation of a portion of the partially polymerized product or, alternatively, in a stirred tank reactor wherein the contents of the reactor are essentially uniform throughout, which is generally employed in combination with one or more plug-flow type reactors. The stirred tank reactors can be boiling and/or coil reactors. Such reactors can be used in series. Processes for use of the stirred tank reactors for preparing polymers are disclosed in Modern Styrenic Polymers, Edited by John Schiers and Duane Priddy, Wiley, ISBN 0 471 49752 5, published in 2003, see pp 43-72, relevant portions incorporated herein by reference. Alternatively, a parallel reactor set-up, as taught in EP 412801, may also be suitable for preparing the polymers.

Multizone plug flow bulk processes include a series of polymerization vessels (or towers), consecutively connected to each other, providing multiple reaction zones. A mixture of monomers used to prepare the copolymer is formed and then fed into the reaction system. A rubber, for example butadiene rubber may be dissolved in the mixture monomers before being fed into the reaction system. The polymerization can be thermally or chemically initiated, and viscosity of the reaction mixture will gradually increase. During the reaction course, where present, the rubber may become grafted with the copolymer and, in the rubber solution, bulk copolymer (referred to also as free copolymer or matrix copolymer or non-grafted copolymer) is also formed. At a point where the free copolymer cannot be "held" in one single, continuous "phase" of rubber solution, it begins to form domains of copolymer dissolved in monomer and solvent. The polymerization mixture now is a two-phase system. As polymerization proceeds, more and more free copolymer is formed, and the rubber phase starts to disperse itself (rubber domains) in the matrix of the ever-growing free copolymer phase. Eventually, the free copolymer becomes a continuous phase. Some copolymer is occluded inside the rubber particles as well. Pre-phase inversion means that the rubber solution is a continuous phase and that no rubber particles are formed, and post phase inversion means that substantially all the rubber phase has converted to rubber domains and there is a continuous copolymer phase. Following the phase inversion, more matrix copolymer may be formed.

A feed with a functional monomer such as N-phenyl maleimide that increases the Tg of the matrix and also the heat resistance of the product can be added in one or more location throughout the polymerization process, the location(s) may be the same or different from where the co-monomers are added, for example, see U.S. Pat. Nos. 5,412,036 and 5,446,103. A feed with a functional additive such as ethylene-bisstearamide, dialkyladipates, polydimethylsiloxane, or other lubricants or release agents that increases the processability of the product can be added in one or more location throughout the polymerization, devolatization and conveying process, the location(s) may be the same or different from where the co-monomers are added.

When a desirable monomer conversion level and a matrix copolymer of desired molecular weight distribution is obtained, where rubber is present, the polymerization mixture may then be subjected to conditions sufficient to cross-link the rubber and remove any unreacted monomer and solvent. Such cross-linking and removal of unreacted monomer, as well as removal of diluent or solvent, if employed, and other volatile materials is advantageously conducted employing conventional devolatilization techniques, such as introducing the polymerization mixture into a devolatilizing chamber, flashing off the monomer and other volatiles at elevated temperatures, for example, from 130° C to 300° C. and/or under vacuum and removing them from the chamber. Thereafter the polymer may be extruded, and bulk pellets obtained from a pelletizer.

The temperatures at which polymerization is conducted are dependent on a variety of factors including the specific initiator and type and concentration of rubber, comonomers, reactor set-up (for example, linear, parallel, recirculation, etc.), and reaction solvent, if any, employed. Polymerization temperatures from about 60° C to about 160° C may be employed prior to phase inversion with temperatures from about 100° C to about 200° C. being employed subsequent to phase inversion. Mass polymerization at such elevated temperatures is continued until the desired conversion of monomers to polymer is obtained. Conversion (also sometimes referred to as percent solids) of from 55 to 90, or 60 to 85, weight percent of the monomers added to the polymerization system (that is, monomers added in the feed and any additional stream, including any recycle stream) to polymer is desired. Percent solids is the ratio of the weight of the solids (for example, rubber plus matrix (co)polymer) to the weight of the reaction mixture (for example, unpolymerized monomer(s)) expressed in percent at any specified time during the polymerization reaction.

A polymer's molecular weight is directly related to the entanglement effects contributing to its rheological and physical properties. The molecular weight of the matrix copolymer produced in the grafting reactor during the production of the rubber-modified vinylidene aromatic substituted copolymer can be adjusted by the addition of a suitable chain transfer agent. Chain transfer agents, or molecular weight regulators, are substances which can undergo atom or group transfer or an addition-elimination. Organic molecules with labile hydrogens and are well known, for example, alpha-methyl styrene dimer, mercaptans or thiols such as n-dodecylmercaptan (nDM) and thioglycolate, disulfides, dithiauram disulfides, monosulfides, halides or halocarbons, common solvents and certain unsaturated compounds such as allyl peroxides, allyl halides, allyl sulfides, and terpenes such as terpinoline. Transition metal complexes as cobalt(II) porphyrin complexes can be used as transfer agents. Chain transfer agents are added in an amount from about 0.0001 to 10 weight percent based on the weight of the reaction mixture (that is, rubber, monomer(s), and solvent, if any). The chain transfer agent may be added in an amount equal to or greater than about 0.001 weight percent, about 0.002, or about 0.003 weight percent based on the weight of the reaction mixture. The chain transfer agent may be added in an amount equal to or less than about 0.5 weight percent, about 0.2, or about 0.1 weight percent based on the weight of the reaction mixture.

The chain transfer agent may be added all at once in one reactor zone or it may be added in two or more reactor zones. Chain transfer agent may be added before phase inversion, during rubber particle sizing, more may be added after particle sizing to help control the matrix molecular weight, and optionally more may be added later to fine tune the matrix molecular weight/molecular weight distribution. The chain transfer agent may be added at the beginning of the polymerization (in other words, at a time where the percent solids for the reaction mixture is equal to the weight percent rubber) in a first amount equal to or greater than 0.001 weight percent, from about 0.002 and about 0.1 weight percent, or from about 0.003 and about 0.05 weight percent based on the weight of the reaction mixture. The amount of chain transfer agent added later, for example after about 40 percent solids, 30 percent solids, is added in a second amount equal to or less than about 0.7 weight percent, about 0.001 to about 0.6 weight percent, or from about 0.002 to about 0.5 weight percent based on the weight of the reaction mixture. The molecular weight of the matrix copolymer depends on, among other things, how much chain transfer agent is used and when it is added.

Disclosed is method of preparing of a vinylidene substituted aromatic polymer, which includes from about 0.05 wt% to about 2.0 wt% of a zinc salt. The method includes the step of mixing pellets of vinylidene substituted aromatic copolymer with a zinc salt and optionally, an adsorbent from about 0% to about 5%, feeding the mixture into an extruder, which may be an intermeshing co-rotating twin screw extruder, collecting the extrudate and making pellets of the extrudate. The barrel of the extruder may be from about 210 °C to about 240 °C and the rate of screw rotation may be from about 250 rpm to about 350 rpm.

Disclosed are methods of forming an article comprising contacting the elements of a composition disclosed herein and forming a structure from the contacted elements wherein either or both of the contacting step and the forming step result in exposure of the contacted elements to temperatures of about 200 °C or greater provided the exposure to temperatures of about 200 °C or greater do not form volatile sulfur compounds. The structure forming steps may be any steps commonly used to form structures from polymers containing vinylidene substituted aromatic monomers. These steps may include extrusion, mixing in mixers and/or extruders, thermoforming, molding, pelletizing, and the like. The structure forming step may involve pelletizing, extrusion, molding or thermoforming. The ingredients of the compositions may be mixed, in some cases at elevated temperatures and then subject to one or more of the processes commonly utilized to form structures. In the contacting and forming steps the contacted elements may be exposed to temperatures of about 250 °C or greater. Some structures may be formed by contacting the elements of a composition as disclosed herein in an extruder and pelletizing the extrudate. The pellets may be used to further form structures by one or more of extrusion, molding and thermoforming. The pellets may be extruded into sheets. These sheets may include layers of other polymeric material to form a structure with two of more layers. The formed sheets may be formed into structures by thermoforming processes.

Disclosed are structures comprising a sheet having a polymeric layer comprising a composition as disclosed herein. The sheet may have more than one layer. The sheets may be formed using by extrusion or multilayer extrusion. Exemplary extrusion and multilayer extrusion process are disclosed in US20110274900A1 or US10018406B2, incorporated herein by reference in their entirety. The sheets may be used as refrigerator liners. Refrigerator liners may be formed by thermoforming the sheets to make the final shape for use in refrigerator liners, processes for thermoforming are disclosed in US5716581A or US10018406B2, incorporated herein by reference in their entirety. An example of forming a multiple layer thermoformable sheet is disclosed. The hardware includes a main extruder and a co-extruder that in combination form the beginnings of a multilayer thermoformable sheet. In either order, components are added to a hopper of the main extruder to form a first melt blend, and components are added a second hopper of the co-extruder, to form a second melt blend. The components may include any component, monomer, additive, rubber, copolymer, or polymer described herein, including any type of monovinylidene aromatic monomers and optionally comonomers disclosed herein. The main extruder feeds the first melt blend into a multilayer feed block to form at least one layer of the thermoformable sheet. The co-extruder feeds the second melt blend into the multilayer feed block which may spilt the second melt into one or more streams. Another co-extruder may feed a third melt blend into the multilayer feed block to form another layer of the thermoformable sheet. Subsequently, the layers are fed into a dye that extrudes the thermoformable sheet. The multilayer feed block may be replaced with multi manifold die for making multiple layer thermoformable sheets. The hardware includes a main extruder and one or more co-extruders that in combination form the beginnings of a multilayer thermoformable sheet. The main extruder or co-extruders may be run at any temperature sufficient to blend one or more ingredients to be fed into a multilayer manifold or feed block. For example, the main extruder or co-extruders may be run at 200 degrees Celsius or more, 215 degrees Celsius or more, or 230 degrees Celsius or more. The main extruder or co-extruders may be run at 240 degrees Celsius or less, 225 degrees Celsius or less, or 210 degrees Celsius or less. The multilayer manifold or feed block may be run at any temperature sufficient to organize and from a multilayer thermoformable sheet. For example, the multilayer manifold or feed block may be run at 200 degrees Celsius or more, 220 degrees Celsius or more, 235 degrees Celsius or more or 250 degrees Celsius. The multilayer manifold or feed block may be run at 300 degrees Celsius or less or less, or 275 degrees Celsius or less.

The compositions disclosed herein may be blended in extruders as disclosed hereinbefore and then fed to molds to form the desired shapes. The molds may be open or closed molds. The molds may inject the molten mixed composition into a mold. The molds may be allowed to cool and then the formed structures may be removed from the molds.

Polymer molecular weight may be measured by gel permeation chromatography (GPC) using narrow molecular weight polystyrene standards and tetrahydrofuran (THF) as solvent, standard integrating software issued together with a UV-detector. All molecular weights are determined by GPC, by the same analysis (Mw, Mn, MWD, Mz, Mz+1, etc...).

Disclosed are articles prepared from the compositions disclosed herein. Such articles may be fabricated in any known manner commonly used with polymers containing one or more vinylidene substituted aromatic compounds. The articles may be fabricated by molding, extrusion, thermoforming, foaming, blow molding, injection molding, extrusion blow molding and combinations thereof. The articles may be extruded and molded, and the like. The articles disclosed may exhibit glass transition temperatures of about 100 ° C or greater. The articles disclosed may be transparent or opaque. All patent and literature references disclosed herein are incorporated in their entirety for all purposes.

### Embodiments

The following are embodiments of the disclosed compositions and methods.
1. A composition comprising: a) one or more polymers containing monomer units derived from vinylidene substituted aromatic monomers; b) one or more antioxidants; and, c) one or more additives of zinc salts, colorants, mold release agents, fillers, reinforcing fibers, ignition resistant additives, stabilizers, adsorbers, antistatic agents, silicon oils, flow enhancers, or combinations thereof; wherein the one or more polymers, antioxidants, and additives do not release volatile sulfur compounds when exposed to temperatures of 200 °C or greater, and according to test procedure VDA 277 release less than 0.02 ugC/g of volatile sulfur containing compounds.
2. A composition according to Embodiment 1 wherein the antioxidant is present in an amount of about 100 to about 10,000 parts per million based on the weight of the composition, 100 to 8000, or 100 to 6000 ppm
3. A composition according to Clam 1 or 2 wherein the vinylidene substituted aromatic monomers comprise vinylidene groups bonded directly to aromatic structures.
4. A composition according to any of the preceding Embodiments wherein the vinylidene substituted aromatic monomers correspond to the formula: 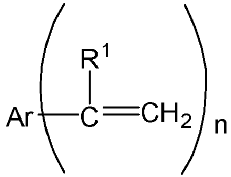 wherein R1 is separately in each occurrence hydrogen or methyl; Ar is separately in each occurrence an aromatic group and n is separately in each occurrence 1 to 3.
5. A composition according to any of the preceding Embodiments wherein the polymers are copolymers containing comonomers of one or more (meth)acrylates, one or more unsaturated nitriles, one or more conjugated dienes, one or more alpha- or beta-unsaturated monobasic acids, one or more vinyl halides, one or more vinyl esters, one or more ethylenically unsaturated dicarboxylic acids or anhydrides or one or more dialkyl maleates or fumarates.
6. A composition according to any of the preceding Embodiments wherein the comonomers include one or more of one or more (meth)acrylates, one or more unsaturated nitriles, one or more conjugated dienes, one or more alpha- or beta-unsaturated monobasic acids, or N-phenyl maleimide.
7. A composition according to any of the preceding Embodiments wherein the antioxidant is one or more of phenol, phosphorous, hydroquinone and alkylated hydroquinone, tocopherol, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants.
8. A composition according to any of the preceding Embodiments when exposed to temperatures of about 200 °C or greater does not form volatile sulfur compounds.
9. A composition according to any of the preceding Embodiments wherein the composition is in the form of pellets.
10. An article formed from a composition according to any one of the preceding Embodiments which exhibits an odor rating of 3.5 or less according to VDA 270 odor testing procedure.
11. A method of forming an article comprising contacting the elements of a composition according any one of Embodiments 1 to 9 and forming a structure from the contacted elements wherein either or both of the contacting step and the forming step result in exposure of the contacted elements to temperatures of about 200 °C or greater provided the exposure to temperatures of about 200 °C or greater do not form volatile sulfur compounds.
12. A method according to Embodiment 11 wherein the structure forming step is selected from pelletizing, extrusion, molding or thermoforming.
13. A method according to Embodiment 11 or 12 wherein the contacted elements are exposed to temperatures of about 250 °C or greater.
14. A method comprising contacting the elements of a composition according to any one of Embodiments 1 to 8 in an extruder and pelletizing the extrudate.
15. A method comprising forming a structure from pellets according to Embodiment 9 wherein the structure is formed by one or more of extrusion, molding and thermoforming.
16. A composition according to any one of Embodiments 1 to 9 wherein the composition does not release volatile sulfur containing compounds at temperatures of about 250 °C or greater.
17. A composition according to any one of Embodiments 1 to 9 wherein volatile sulfur compounds are compounds which are volatile at 200 °C or greater.
18. A composition according to any one of Embodiments 1 to 9 wherein volatile sulfur compounds are compounds which are volatile at 250 °C or greater.
19. A composition according to any one of Embodiments 1 to 9 wherein the volatile sulfur compounds comprise alkyl thiols.
20. A composition according to any one of Embodiments 1 to 9 wherein the volatile sulfur compounds have molecular weights of 200 g per mole or less.
21. A composition according to any one of Embodiments 1 to 9 wherein the volatile sulfur compounds comprise alkyl thiols having molecular weights of 200 g per mole or less.
22. A composition according to any one of the preceding Embodiments wherein the copolymers are prepared by mass or emulsion polymerization.
23. A composition according to any one of the preceding Embodiments wherein the copolymers comprise vinylidene substituted aromatic monomers and one or more conjugated dienes.
24. A composition according to Embodiment 23 wherein the copolymers comprise acrylonitrile butadiene styrene or high impact polystyrene.

### Illustrative Examples

The following examples are provided to illustrate the invention but are not intended to limit the scope thereof. All parts and percentages are by weight unless otherwise indicated.

### Test Procedures

### Testing Procedure VDA-277

Approximately 2 grams of pellets prepared as described herein is weighed in a 25 mL headspace vial and is statically equilibrated at 120 °C for 5 hours (using helium as carrier gas), analyses were performed in triplicate. Quantification is based on external calibration via acetone. The method uses a headspace gas chromatography with FID as a detector. Quantification data is obtained via a summation of the areas of all peaks being compared versus the area of toluene external standard.

### Testing Procedure VDA-270

A 1 or 3 liter glass testing cup with unscented sealing and lid; the cup, the sealing and the lid are cleaned before use and are employed in the testing procedure. The specimen quantity is specified in three steps as described in table below. The assignment to variants A/B/C is made according to the proportional quantity of material used in the vehicle interior. Variant B, which uses a 20 g pellet sample in a 1-litre-vessel. The vessel is closed and stored in the pre-heated thermal chamber.

| | | Quantity for | |
|---|---|---|---|
| **Variant** | **Application** | **1-litre-vessel** | **3-litre-vessel** |
| A | Clips, stoppers,spouts and other small parts | (10 ±1) g )¹ | (30 ± 3) g |
| B | Arm rests, ash trays, straps, gear shift lever bellows, sun shields and other components of medium size | (20 ± 2) g | (60 ± 6) cm³ |
| C | Covering and insulating materials, films, leather, foamed materials, carpets and other materials with large surfaces | (50 ±5) cm³ respectively (200 ± 20) cm² )² | (150 ± 15) cm³ |

| | | | |
|---|---|---|---|
| )¹ when the total amount of the sample (the part) in the vehicle is less than 10g, then this is the maximum amount used for the test. )² for large area materials with a thickness < 3 mm | | | |

Three storage conditions are available in the table below. Variant 3, i.e. heating the sample at 80 °C for 2 hours is used in Example 4.

| **Variant** | **Temperature** | **Storage duration** |
|---|---|---|
| 1 | (23 ± 2) °C | (24 ± 1) h |
| 2 | (40 ± 2) °C | (24 ± 1) h |
| 3 | (80 ± 2) °C | 2 h ± 10 min |

To begin the odor level evaluation, the test vessel is removed from the thermal chamber and is cooled down to a test temperature of 60 °C prior to the evaluation. Approval tests are made by at least three testers. For odor testing the cover of the test vessel is lifted as little as possible for minimizing the air exchange with the environment. The odor evaluation is made for the variant B, using a grading system from 1 to 6, half-steps being allowed. The odor rating according to the scale described below is indicated as an arithmetic mean of the individual grades, the value being rounded down to half-step grades, with indication of the test method and the variant used.

**Evaluation scale:**

| | |
|---|---|
| Grade 1 | not perceptible |
| Grade 2 | perceptible, not disturbing |
| Grade 3 | clearly perceptible, but not disturbing |
| Grade 4 | disturbing |
| Grade 5 | strongly disturbing |
| Grade 6 | not acceptable |

### Example 1: Injection Molding of ABS Parts

Molded plaques are prepared from two compositions. Composition 1 contain ABS prepared using the procedure described in Shields et al., International Publication No. WO2007047120A2), wherein the polybutadiene used contains two antioxidants Irganox 1076 which is a phenol based antioxidant and Irganox 1520 which is a sulfur containing phenol which is illustrated by the following formula :

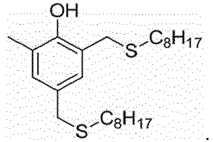

Composition 2 contains the ABS prepared as disclosed wherein the polybutadiene used contained one antioxidant Irganox 1076 which is a phenol-based antioxidant which does not contain sulfur. Pellets containing the compositions are dried in an air draft oven for 4 hours at 80°C and then are used to prepare test specimens on a 110 ton CREATOR CI-110 injection molding machine, having the following molding conditions: barrel temperature of 260°C, nozzle temperature of 250°C, mold temperature of 50°C, injection time: 3 seconds, holding time 9 second and cooling time 20 seconds.

### Example 2: Testing of ABS Molding Part

The pellets used to prepare the plaques were tested according to VDA 270 and VDA 277. The plaque samples are made as described in Example 1. The size of sample plaques is 60mm x 90mm x 2mm. The samples are sealed in aluminum foil bags in prior of testing. The molded parts are cut into 20g samples and tested according to VDA-270, variant B and VDA 277. The vessel volume is 1 liter. The results are shown in the table below. The fourth through eighth columns show the results according to VDA 277 and the units a ugC/g. TVOC is the total volatile organic compounds, na means not applicable.

| 1 Form | 2 Comp | 3 Injection temp °C | 4 TVOC | 5 Octane thiol | 6 Styrene | 7 Ethyl Benzene | 8 Acrylonitrile | 9 VDA 270 |
|---|---|---|---|---|---|---|---|---|
| Pellets | 1 | na | 17.53 | 0.1 | 6.17 | 6.85 | 1.39 | 3.8 |
| Pellets | 2 | na | 16.7 | 0 | 6.01 | 6.68 | 1.55 | 3.5 |
| Molded | 1 | 240 | 15.41 | 0.04 | 5.52 | 5.81 | 1.15 | 3.6 |
| Molded | 2 | 240 | 25.85 | 0 | 9.12 | 11.21 | 1.68 | 3.3 |
| Molded | 2 | 270 | 21.46 | 0 | 7.47 | 8.62 | 1.56 | 3.3 |

The examples show a correlation between VDA 270 test results and the amount of volatile thiol (octane thiol) level. A graph of the odor data is provided in Figure 1. Figure 1 demonstrates a linear correlation between octane thiol (VDA 277) and odor (VDA 270).

## Claims

1. A composition comprising:
a) one or more polymers containing monomer units derived from vinylidene substituted aromatic monomers;
b) one or more antioxidants; and,
c) one or more additives of zinc salts, colorants, mold release agents, fillers, reinforcing fibers, ignition resistant additives, stabilizers, adsorbers, antistatic agents, silicon oils, flow enhancers, or combinations thereof; wherein the one or more polymers, antioxidants, and additives do not release volatile sulfur compounds when exposed to temperatures of 200 °C or greater, and according to test procedure VDA 277 release less than 0.02 ugC/g of volatile sulfur containing compounds.

2. A composition according to Claim 1 wherein the antioxidant is present in an amount of about 100 to about 10,000 parts per million based on the weight of the composition, 100 to 8000, or 100 to 6000 ppm.

3. A composition according to Clam 1 or 2 wherein the vinylidene substituted aromatic monomers comprise vinylidene groups bonded directly to aromatic structures.

4. A composition according to any of the preceding claims wherein the vinylidene substituted aromatic monomers correspond to the formula: 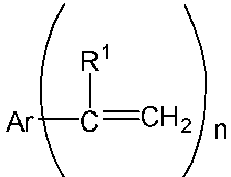 wherein R¹ is separately in each occurrence hydrogen or methyl;
Ar is separately in each occurrence an aromatic group and,
n is separately in each occurrence 1 to 3.

5. A composition according to any of the preceding claims wherein the polymers are copolymers containing comonomers of one or more (meth)acrylates, one or more unsaturated nitriles, one or more conjugated dienes, one or more alpha- or beta-unsaturated monobasic acids, one or more vinyl halides, one or more vinyl esters, one or more ethylenically unsaturated dicarboxylic acids or anhydrides or one or more dialkyl maleates or fumarates.

6. A composition according to any of the preceding claims wherein the comonomers include one or more of one or more (meth)acrylates, one or more unsaturated nitriles, one or more conjugated dienes, one or more alpha- or beta-unsaturated monobasic acids, or N-phenyl maleimide.

7. A composition according to any of the preceding claims wherein the antioxidant is one or more of phenol, phosphorous, hydroquinone and alkylated hydroquinone, tocophero, O- and N-benzyl compound, alkylidenebisphenol, hydroxybenzylated malonate, aromatic hydroxybenzyl compound, triazine compound, benzylphosphonate, acylaminophenol, esters and amides of propionic acid, ascorbic acid, or aminic based antioxidants.

8. A composition according to any of the preceding claims when exposed to temperatures of about 200 °C or greater does not form volatile sulfur compounds.

9. A composition according to any of the preceding claims wherein the composition is in the form of pellets.

10. An article formed from a composition according to any one of the preceding claims which exhibits an odor rating of 3.5 or less according to VDA 270 odor testing procedure.

11. A method of forming an article comprising contacting the elements of a composition according any one of Claims 1 to 9 and forming a structure from the contacted elements wherein either or both of the contacting step and the forming step result in exposure of the contacted elements to temperatures of about 200 °C or greater provided the exposure to temperatures of about 200 °C or greater do not form volatile sulfur compounds.

12. A method according to Claim 11 wherein the structure forming step is selected from pelletizing, extrusion, molding or thermoforming.

13. A method according to Claim 11 or 12 wherein the contacted elements are exposed to temperatures of about 250 °C or greater.

14. A method comprising contacting the elements of a composition according to any one of Claims 1 to 8 in an extruder and pelletizing the extrudate.

15. A method comprising forming a structure from pellets according to Claim 9 wherein the structure is formed by one or more of extrusion, molding and thermoforming.
